# FASCICULE DE BREVET EUROPEEN

(11) **EP 4 527 650 B1**
(45) Date de publication et mention de la délivrance du brevet: **27.05.2026**
(21) Numéro de dépôt: 24199872.3
(22) Date de dépôt: 11.09.2024
(51) Int. Cl.: B60J 5/06

(54) **OUVRANT COULISSANT MOTORISÉ D'UN VÉHICULE**
MOTORISCH ANGETRIEBENER SCHIEBEFLÜGEL EINES FAHRZEUGS
MOTOR-DRIVEN SLIDING DOOR OF A VEHICLE

(30) Priorité: 12.09.2023 FR 2309606
(43) Date de publication de la demande: 26.03.2025
(73) Titulaire: Renault s.a.s, 92100 Boulogne Billancourt (FR)
(72) Inventeur: POULLARD, Christophe, 78640 Villiers Saint Frédéric (FR)

(56) Documents cités:
- EP-A1- 2 052 896
- JP-A- 2004 034 759
- JP-B2- 3 861 163
- US-B2- 7 669 368

## Description

La présente invention concerne le domaine des ouvrants motorisés pour véhicule. La présente invention concerne plus particulièrement l'architecture de tels ouvrants permettant de connecter électriquement soit une source d'alimentation électrique à un moteur d'entraînement disposé dans l'ouvrant ou un dispositif de commande du verrouillage/déverrouillage à un moteur d'entraînement disposé sur la caisse du véhicule.

Certains véhicules automobiles comprennent un ouvrant coulissant, un tel ouvrant pouvant être agencé sur un seul côté, de chaque côté ou à l'arrière d'une caisse du véhicule.

Le document EP 2 052 896 A1 divulgue un tel ouvrant coulissant.

Ces ouvrants sont configurés pour coulisser selon un premier sens de façon à générer une ouverture de l'ouvrant et selon un deuxième sens de façon à provoquer une fermeture de l'ouvrant. Le déplacement de l'ouvrant dans un sens ou dans l'autre peut être commandé de façon motorisée par l'utilisateur en activant à distance un ou plusieurs moteurs entraînant l'ouvrant selon ledit déplacement.

Au moins le ou les moteurs impliqués dans le déplacement de l'ouvrant nécessitent d'être alimentés en électricité depuis un moyen de stockage en énergie électrique disposé dans le véhicule. À cet effet, le ou lesdits moteurs sont connectés au moyen de stockage en énergie électrique par un câble d'alimentation électrique.

Ce câble d'alimentation doit pouvoir accompagner le déplacement de l'ouvrant par rapport au véhicule. Afin de le protéger, il est connu de disposer ledit câble d'alimentation directement dans un logement réalisé dans un panneau intérieur de l'ouvrant.

En effet, ce logement est classiquement réalisé par emboutissage du panneau intérieur ce qui entraîne une consommation importante de place.

La présente invention s'inscrit dans ce contexte et se propose de pallier au moins certains des inconvénients de l'art antérieur et notamment de proposer une architecture d'un ouvrant motorisé permettant de protéger un câble d'alimentation tout en minimisant l'encombrement de l'ouvrant pour protéger ledit câble d'alimentation.

Ainsi, la présente invention porte sur un ouvrant coulissant motorisé destiné à équiper un véhicule, l'ouvrant coulissant motorisé comprenant un panneau extérieur, un panneau intérieur, au moins une partie d'un moyen d'entraînement configuré pour permettre l'ouverture et/ou la fermeture de l'ouvrant coulissant motorisé, ledit moyen d'entraînement comportant notamment une motorisation rendant l'ouvrant coulissant motorisé et au moins un câble d'alimentation disposé dans le volume de l'ouvrant coulissant motorisé, l'au moins un câble d'alimentation étant configuré pour permettre l'alimentation en énergie électrique d'au moins un moteur d'entraînement compris dans l'ouvrant coulissant motorisé et/ou d'une commande électrique du moyen d'entraînement comportant au moins un moteur d'entraînement disposé sur la caisse du véhicule sur laquelle l'ouvrant coulissant motorisé est destiné à être monté à coulissement, le panneau intérieur comprenant une découpe dans laquelle est logé un bac de protection, le bac de protection formant un logement de réception dans lequel est disposé l'au moins un câble d'alimentation, le bac de protection étant distinct du panneau intérieur et solidarisé audit panneau intérieur.

L'ouvrant coulissant motorisé est une porte d'un véhicule, par exemple automobile, apte à se déplacer le long d'un rail de guidage, réalisé sur le véhicule ou sur l'ouvrant coulissant motorisé, pour permettre ou interdire l'accès au véhicule. L'ouvrant coulissant motorisé peut être une porte latérale ou encore une porte arrière d'un véhicule utilitaire dès lors que l'ouverture et/ou la fermeture de l'ouvrant coulissant motorisé est réalisée par un déplacement coulissant le long d'un moyen de guidage.

Le moyen d'entraînement comprend au moins un moteur d'entraînement permettant de motoriser l'ouverture et/ou la fermeture de l'ouvrant coulissant motorisé. Le câble d'alimentation permet d'activer directement l'au moins un moteur d'entraînement ou une commande électrique dudit moteur d'entraînement pour permettre le déplacement de l'ouvrant coulissant motorisé.

L'ouvrant coulissant motorisé est formé d'au moins un panneau extérieur et d'un panneau intérieur. Le panneau extérieur forme l'élément de carrosserie du véhicule directement au contact de l'environnement extérieur au véhicule.

Ce panneau extérieur de carrosserie présente une structure permettant à l'ouvrant coulissant motorisé de résister aux chocs et agressions extérieures. Le panneau intérieur forme l'élément du véhicule pour l'habitacle du véhicule.

Le volume de l'ouvrant coulissant motorisé est défini entre le panneau extérieur et le panneau intérieur. On comprend que le câble d'alimentation est disposé dans le volume de l'ouvrant coulissant motorisé de sorte que lorsque l'ouvrant coulissant motorisé est dans une position de fermeture, le câble d'alimentation est logé dans l'ouvrant coulissant motorisé entre le panneau extérieur et le panneau intérieur.

La découpe du panneau intérieur est réalisée de sorte que cette dernière présente des dimensions complémentaires de celles du bac de protection pour loger le bac de protection dans ladite découpe en minimisant l'espace entre le bac de protection et le panneau intérieur. Ainsi la découpe du panneau intérieur est ajustée pour permettre à ce dernier de recevoir le bac de protection avec les parois définissant le bac de protection qui sont au plus près des bords du panneau intérieur délimitant la découpe.

Le bac de protection est solidarisé au panneau intérieur et est destiné à loger un câble d'alimentation permettant de raccorder électriquement l'ouvrant coulissant motorisé. Ce câble d'alimentation est apte à accompagner l'ouvrant coulissant motorisé lors du déplacement de l'ouvrant coulissant motorisé entre une position d'ouverture et une position de fermeture. Le câble d'alimentation accompagne, lors du déplacement de l'ouvrant coulissant motorisé entre sa position d'ouverture et sa position de fermeture, le mouvement de l'ouvrant coulissant motorisé en restant au moins en partie logé dans le bac de protection. Au fur et à mesure du déplacement de l'ouvrant coulissant motorisé, le câble d'alimentation est apte à sortir du bac de protection pour accompagner le déplacement de l'ouvrant coulissant motorisé. On comprend qu'au moins une partie du câble d'alimentation est continuellement lié à un élément de l'ouvrant coulissant motorisé.

Le bac de protection forme un logement, ledit logement étant disposé dans une épaisseur, ou volume, de l'ouvrant coulissant motorisé définie entre le panneau extérieur et le panneau intérieur. Le panneau extérieur et le panneau intérieur, avec au moins un des panneaux qui présente une forme non plane, sont solidarisés l'un à l'autre notamment sur leur périphérie pour générer un espace étanche à l'intérieur de l'ouvrant entre le panneau extérieur et le panneau intérieur. On comprend que l'épaisseur de l'ouvrant coulissant motorisé, au sein duquel est positionné le bac de protection, est formée de l'épaisseur du panneau extérieur, de l'épaisseur du panneau intérieur et de l'espace entre le panneau intérieur et le panneau extérieur.

Selon une caractéristique de l'invention, le logement est disposé dans le volume de l'ouvrant coulissant motorisé défini entre le panneau extérieur et le panneau intérieur.

Selon une caractéristique de l'invention, le logement est délimité au moins en partie par une paroi de fond et par une paroi latérale, la paroi latérale et la paroi de fond formant un premier angle l'une avec l'autre compris entre 90° et 120°. Un tel angle entre la paroi latérale, ou paroi latérale, et la paroi de fond permet de limiter l'encombrement du bac de protection au sein de l'ouvrant coulissant motorisé. En effet, en formant les parois du logement par un bac de protection rapporté dans une ouverture formée par la découpe du panneau intérieur, plutôt que directement par un emboutissage du panneau intérieur, on peut se rapprocher au maximum d'une réalisation à angle droit, ce qui limite l'angle entre la paroi de fond et la paroi latérale et ce qui permet de limiter l'espace pris par le bac de protection dans l'ouvrant coulissant motorisé.

Selon une caractéristique de l'invention, le logement du bac de protection est délimité par un bord périphérique du bac de protection, le bord périphérique étant solidarisé au panneau intérieur. Le bord périphérique prolonge perpendiculairement la paroi latérale à une extrémité opposée à celle liée à la paroi de fond et il prolonge cette paroi latérale vers l'extérieur du bac de protection.

Selon une caractéristique de l'invention, le logement présente une forme qui épouse la forme du câble d'alimentation. Pour limiter l'encombrement du bac de protection dans l'ouvrant coulissant motorisé, le logement présente des dimensions lui permettant d'épouser la forme du câble d'alimentation.

Selon une caractéristique de l'invention, le câble d'alimentation est entièrement logé dans le logement formé par le bac de protection.

Selon une caractéristique de l'invention, le bord périphérique est au contact du panneau intérieur par un appui plan.

On comprend que le bord périphérique s'étend dans un plan parallèle au plan dans lequel s'inscrit la portion du panneau intérieur au contact du bord périphérique.

Selon une caractéristique de l'invention, le bac de protection est solidarisé au panneau extérieur au niveau d'une portion du bac de protection distincte du bord périphérique.

Selon une caractéristique de l'invention, la portion du bac de protection au niveau de laquelle est solidarisé le bac de protection au panneau extérieur est disposée en regard du logement. Cette portion du bac de protection permet d'augmenter la rigidité de l'ouvrant coulissant motorisé en générant un point de liaison entre le panneau extérieur et le panneau intérieur par l'intermédiaire du bac de protection. Plus spécifiquement, cette portion du bac de protection forme la paroi de fond du bac de protection.

L'invention porte également sur un véhicule automobile comprenant un ouvrant coulissant motorisé conforme à au moins certaines des caractéristiques, le véhicule automobile comprenant un rail de guidage dans lequel l'ouvrant coulissant motorisé est apte à se déplacer entre une position d'ouverture et une position de fermeture, le bac de protection de l'ouvrant coulissant motorisé étant disposé directement en regard du rail de guidage. La disposition de l'ouvrant coulissant motorisé en regard du rail de guidage peut être réalisée en regard d'un bavolet., c'est-à-dire en regard d'un élément de protection du bas de caisse du véhicule. Une telle disposition du bac de protection au niveau du rail de guidage permet d'assurer une meilleure protection du câble d'alimentation, notamment en cas d'un choc provenant de l'extérieur du véhicule.

D'autres caractéristiques, détails et avantages de l'invention ressortiront plus clairement à la lecture de la description qui suit d'une part, et d'exemples de réalisation donnés à titre indicatif et non limitatif en référence aux dessins schématique annexés d'autres part, sur lesquels :
[Fig.1] représente schématiquement une vue générale d'un ouvrant coulissant motorisé selon un mode de réalisation de l'invention destiné à équiper un véhicule automobile ;
[Fig.2] représente schématiquement une vue générale d'un bac de protection de l'ouvrant coulissant motorisé visible sur la figure 1, le bac de protection étant destiné à loger un câble d'alimentation en énergie électrique pour un ou plusieurs moteurs électriques de l'ouvrant coulissant motorisé ;
[Fig.3] représente schématiquement une vue de coupe locale de l'ouvrant coulissant motorisé visible sur la figure 1 au niveau du bac de protection visible sur la figure 2 ;
[Fig.4] représente schématiquement une vue de coupe de l'ouvrant coulissant motorisé par un plan de coupe s'étendant longitudinalement et transversalement lorsque celui-ci est lié à un véhicule automobile et se trouve dans une position de fermeture ;
[Fig.5] représente schématiquement une vue de coupe de l'ouvrant coulissant motorisé par un plan de coupe s'étendant longitudinalement et transversalement lorsque celui-ci est lié au véhicule automobile et se trouve dans une position d'ouverture.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

Sur les figures, les éléments communs à plusieurs figures conservent la même référence.

Dans la description détaillée qui va suivre, les dénominations « longitudinale », « transversale » et « verticale » se réfèrent à l'orientation de l'ouvrant coulissant motorisé selon l'invention. Une direction longitudinale correspond à une direction d'avancement d'un véhicule équipé de l'ouvrant coulissant motorisé, cette direction longitudinale étant parallèle à un axe longitudinal L d'un repère L, V, T illustré sur les figures. Une direction transversale correspond à une direction perpendiculaire, dans un plan parallèle à la route sur laquelle le véhicule circule, à la direction d'avancement du véhicule équipé de l'ouvrant coulissant motorisé, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

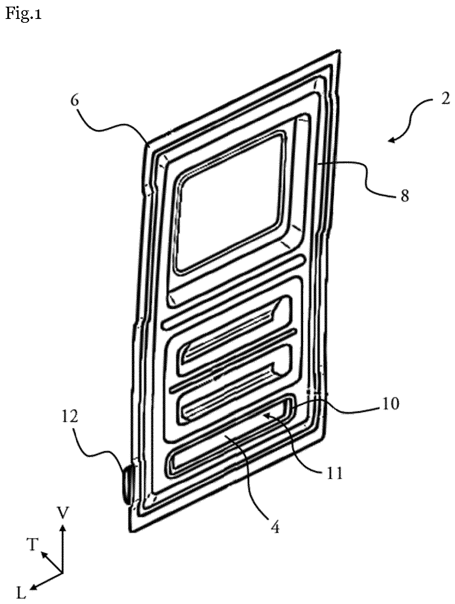

La figure 1 illustre un ouvrant coulissant motorisé 2 selon un mode de réalisation de l'invention. L'ouvrant coulissant motorisé 2 est destiné à équiper un véhicule, et plus particulièrement un véhicule automobile. Cet ouvrant coulissant motorisé 2 forme, dans le mode de réalisation représenté, une porte latérale d'un véhicule automobile.

L'ouvrant coulissant motorisé 2 est monté coulissant par rapport au véhicule de sorte à pouvoir se déplacer d'une part, dans un premier sens pour atteindre une position d'ouverture permettant, par exemple, à un utilisateur d'entrer ou de sortir du véhicule et d'autre part, dans un deuxième sens pour atteindre une position de fermeture empêchant, par exemple, un utilisateur d'entrée ou de sortir du véhicule. On comprend que le premier sens et le deuxième sens sont dans la même direction.

Le déplacement de l'ouvrant coulissant motorisé 2 est permis, à titre d'exemple illustratif et non limitatif de l'invention, par des galets solidaires de l'ouvrant coulissant motorisé 2 circulant dans au moins un rail de guidage réalisé sur le véhicule automobile. On comprend que les galets sont liés à l'ouvrant coulissant motorisé 2 et coopèrent avec l'au moins un rail de guidage pour maintenir l'ouvrant coulissant motorisé 2 solidaire du véhicule automobile.

Bien entendu, tout autre moyen permettant de faire coulisser l'ouvrant coulissant motorisé 2 entre une position d'ouverture et une position de fermeture tel que décrit précédemment peut être utilisé.

Selon l'invention, le déplacement de l'ouvrant coulissant motorisé 2 est piloté par l'intermédiaire d'au moins un moteur d'entraînement configuré pour déplacer l'ouvrant coulissant motorisé 2 par rapport au véhicule entre la position d'ouverture et la position de fermeture. Le déplacement de l'ouvrant coulissant motorisé 2 par l'au moins un moteur d'entraînement peut être réalisé, à titre d'exemples illustratifs et non limitatifs de l'invention, en commandant le déplacement d'au moins un galet dans le rail de guidage ou encore par le déplacement d'une roue dentée solidaire soit de l'ouvrant coulissant motorisé 2, dans une crémaillère solidaire du véhicule automobile, soit de la caisse du véhicule, dans une crémaillère solidaire de l'ouvrant coulissant motorisé.

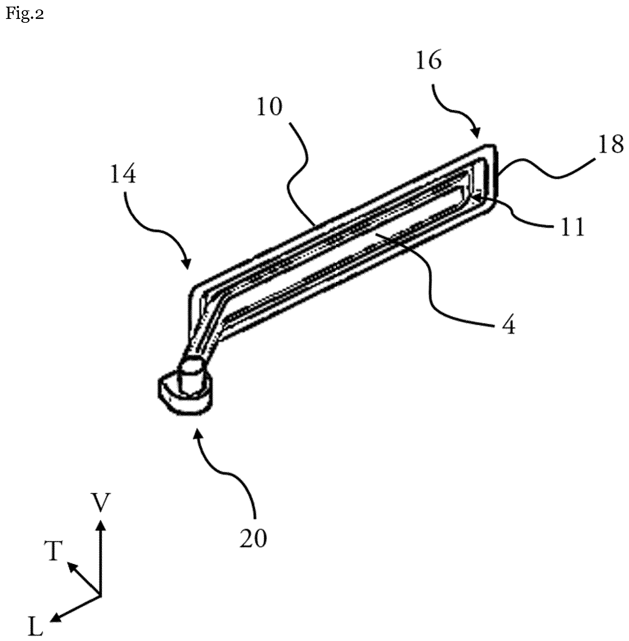

L'au moins un moteur d'entraînement est un moteur électrique alimenté en énergie électrique depuis un moyen de stockage en énergie. Le moyen de stockage en énergie électrique est disposé dans le véhicule automobile et est relié à l'au moins un moteur d'entraînement par un câble d'alimentation 4, visible plus en détail sur les figures 2 à 5. Le moyen de stockage en énergie électrique peut par exemple être des batteries du véhicule automobile.

L'ouvrant coulissant motorisé 2 comprend un panneau extérieur 6 formant la partie de l'ouvrant coulissant motorisé 2 destinée à être au contact de l'environnement extérieur au véhicule automobile et un panneau intérieur 8 solidarisé au panneau extérieur 6 et formant la partie de l'ouvrant coulissant motorisé 2 destiné à être au contact de l'environnement interne à l'habitacle du véhicule automobile.

En outre, l'ouvrant coulissant motorisé 2 comprend un bac de protection 10 dans lequel est disposé le câble d'alimentation 4. Le bac de protection 10 est solidarisé au panneau intérieur 8 et forme un logement 11 disposé dans un volume, ou une épaisseur, de l'ouvrant coulissant motorisé 2 délimité entre le panneau extérieur 6 et le panneau intérieur 8. Il convient de noter que le câble d'alimentation 4 est, tel qu'il sera décrit plus en détail dans la description qui suivra, apte à se déplacer dans le bac de protection 10 de sorte à accompagner l'ouvrant coulissant motorisé 2 lors de son déplacement entre sa position d'ouverture et sa position de fermeture. Pour loger le bac de protection 10, le panneau intérieur 8 comprend une découpe formant une ouverture aux dimensions du bac de protection 10. Cette découpe forme une portion vide au sein du panneau intérieur 8 permettant d'insérer le bac de protection 10 dans le volume de l'ouvrant coulissant motorisé 2.

Il est remarquable sur le mode de réalisation représenté par la figure 1 que l'ouvrant coulissant motorisé 2 comprend un bossage 12 disposé contre le panneau extérieur 6. Ce bossage 12 et le bac de protection 10 sont disposés l'un en regard de l'autre de sorte que le bossage 12 participe à protéger le bac de protection 10, par exemple d'un choc extérieur au véhicule et pouvant endommager le bac de protection 10.

La figure 2 représente de façon très schématique le bac de protection 10 dans lequel est logé le câble d'alimentation 4. Plus spécifiquement, le bac de protection 10 s'étend selon une direction d'allongement principal longitudinale entre une première extrémité 14 et une deuxième extrémité 16. Le logement 11 s'étend au sein du bac de protection 10 entre la première extrémité 14 et la deuxième extrémité 16 parallèlement à la direction d'allongement principal longitudinale du bac de protection 10.

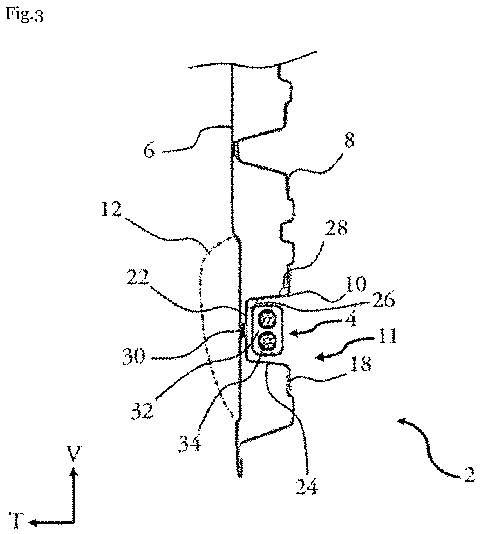

Le bac de protection 10 comprend un bord périphérique 18 qui s'étend sur tout le pourtour du bac de protection 10 en délimitant radialement l'ouverture du logement 11. Le bord périphérique 18 s'étendant, dans le mode de réalisation représenté, dans un plan parallèle à la direction longitudinale. Ce bord périphérique 18 est solidarisé avec le panneau intérieur 8 tel qu'il sera décrit plus en détail en lien avec la figure 3 et permet d'assurer l'étanchéité entre le bac de protection 10 et le panneau intérieur 8.

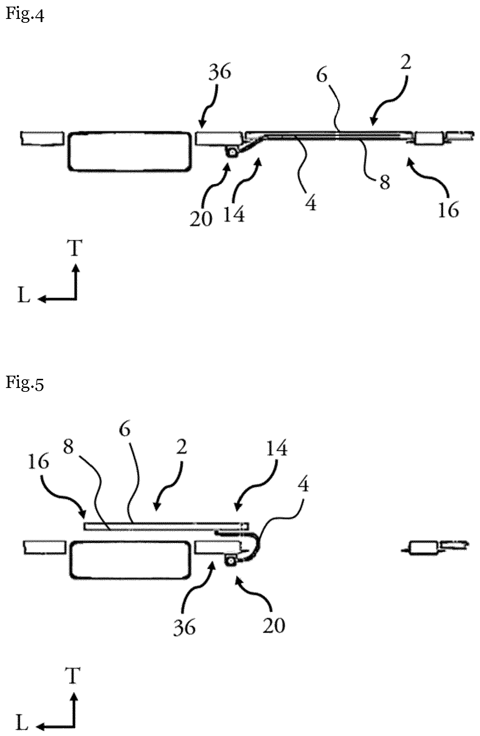

En outre, le câble d'alimentation 4 est solidaire du bac de protection 10 au niveau de la deuxième extrémité 16 et mobile par rapport au bac de protection 10 au niveau de la première extrémité 14 tel qu'il sera décrit plus en détail en lien avec les figures 4 et 5. Le câble d'alimentation 4 est lié à un point de fixation 20 solidaire du véhicule. Au niveau de ce point de fixation 20 le câble d'alimentation 4 peut rejoindre le moyen de stockage en énergie électrique, le cas échéant en passant à travers la carrosserie du véhicule.

La figure 3 représente une vue de coupe de l'ouvrant coulissant motorisé 2 par un plan de coupe s'étendant transversalement et verticalement, c'est-à-dire parallèlement aux axes T et V.

Le logement 11 du bac de protection 10 est délimité notamment par une paroi de fond 22 du bac de protection 10 qui s'étend à l'opposé de l'ouverture du logement 11 et en regard de la face interne du panneau extérieur 6, c'est-à-dire la face du panneau extérieur en regard du panneau intérieur 8, et par une paroi latérale 24 joignant la paroi de fond 22 au bord périphérique 18.

La paroi de fond 22 s'étend dans un plan sensiblement parallèle à un plan dans lequel s'étend une portion du panneau extérieur 6 directement situé en regard de la paroi de fond 22. La paroi latérale 24 s'étend d'une extrémité transversale proximale du panneau extérieur 6 au contact de la paroi de fond 22 à une extrémité transversale distale du panneau extérieur 6 au contact du bord périphérique 18.

En outre, la paroi latérale 24 forme un premier angle 26 avec la paroi de fond 22 compris entre 90° et 120°. De façon préférentielle ce premier angle 26 est inférieur à 100°. Un tel premier angle 26 permet de limiter l'encombrement du bac de protection 10 en permettant à la paroi latérale 24 d'épouser la forme du câble d'alimentation 4 pour limiter l'espace pris par le logement 11 sur l'ouvrant coulissant motorisé 2. Bien entendu, il doit être compris par « épouser » que la paroi latérale 24 est au plus proche du câble d'alimentation 4 sans limiter le déplacement dudit câble d'alimentation 4 dans le logement 11.

La paroi latérale 24 forme un deuxième angle 28 avec le bord périphérique 18 qui, dans le mode de réalisation représenté, est égal au premier angle 26. En effet, dans le mode de réalisation représenté, le bord périphérique 18 s'étend dans un plan parallèle au plan dans lequel s'étend la paroi de fond 22. Plus spécifiquement, le deuxième angle 28 formé entre la paroi latérale 24 et le bord périphérique 18 est compris entre 90° et 120°. De façon préférentielle, ce deuxième angle 28 est inférieur à 100°.

On comprend de la description du bac de protection 10 qui précède que le bac de protection 10 est une pièce rapportée du panneau intérieur 8, c'est-à-dire que le bac de protection 10 et le panneau intérieur 8 sont deux pièces formées séparément. Les valeurs d'angle précédemment évoquées sont obtenues du fait que le bac de protection 10 est distinct du panneau intérieur 8 ce qui permet de former lesdites valeurs d'angle.

En outre, il est remarquable sur la figure 3 que la paroi de fond 22 est solidarisée au panneau extérieur 6 par un organe de solidarisation 30 interposé entre la paroi de fond 22 et le panneau extérieur 6. Cet organe de solidarisation 30 participe à rigidifier l'ouvrant coulissant motorisé 2 au niveau du bac de protection 10. Plus précisément, dans le mode de réalisation représenté, l'organe de solidarisation 30 est formé par du mastic assurant un point de liaison directement avec le bac de protection 10 ce qui permet d'améliorer la rigidité de l'ouvrant coulissant motorisé 2 en créant un point de liaison entre le panneau extérieur 6 et le panneau intérieur 8 par l'intermédiaire de l'organe de solidarisation 30 et du bac de protection 10.

En effet le bac de protection 10 est, tel qu'il a pu être évoqué précédemment, solidarisé au panneau intérieur 8 au niveau du bord périphérique 18. Tel que visible sur la figure 3, le bord périphérique 18 s'étend dans un plan parallèle au plan de la portion du panneau intérieur 8 situé aux abords du bord périphérique 18. Une telle caractéristique permet de réaliser une solidarisation, notamment par clipsage, entre le panneau intérieur 8 et le bord périphérique 18 formant un appui plan. Un tel appui plan permet notamment, à titre d'exemple illustratif et non limitatif de l'invention, de positionner un panneau de garnissage contre le panneau intérieur 8 et le bord périphérique.

La figure 3 permet également de mettre en évidence une coupe du câble d'alimentation 4. Le câble d'alimentation 4 est formé d'une chaîne porte-câble et comprend une succession de maillons articulés 32 et au moins un câble électrique 34. Cette configuration du câble d'alimentation 4 lui permet d'accompagner le mouvement de l'ouvrant coulissant motorisé 2.

Les figures 4 et 5 représentent une vue de coupe de l'ouvrant coulissant motorisé 2 selon un plan de coupe s'étendant longitudinalement et transversalement, c'est-à-dire parallèlement aux axes L et T.

Plus spécifiquement, la figure 4 représente l'ouvrant coulissant motorisé 2 lié à un véhicule automobile 36 lorsque l'ouvrant coulissant motorisé 2 est dans sa position de fermeture. Dans la position de fermeture de l'ouvrant coulissant motorisé 2, ce dernier est maintenu dans ladite position de fermeture par un système de verrouillage prévu sur l'ouvrant coulissant motorisé 2 et coopérant avec un dispositif complémentaire réalisé sur le véhicule automobile 36. La figure 5 représente quant à elle l'ouvrant coulissant motorisé 2 lié audit véhicule automobile 36 lorsque l'ouvrant coulissant motorisé 2 est dans sa position d'ouverture.

Tel que visible par un regard croisé entre les figures 4 et 5, le câble d'alimentation 4 est lié à l'ouvrant coulissant motorisé 2 au niveau de la deuxième extrémité 16 du bac de protection 10. Lors du déplacement de l'ouvrant coulissant motorisé 2 le câble d'alimentation 4 est apte à suivre ledit déplacement de l'ouvrant coulissant motorisé 2. En effet, tel qu'il est remarquable sur les figures 4 et 5 lors du passage de l'ouvrant coulissant motorisé 2 de sa position de fermeture à sa position d'ouverture, le câble d'alimentation 4 se replie sur lui-même de telle sorte qu'une partie du câble d'alimentation 4 au niveau de la deuxième extrémité 16 du bac de protection 10 reste solidaire de l'ouvrant coulissant motorisé 2 tandis que le reste du câble d'alimentation 4 est apte à sortir du logement 11 pour permettre le déplacement de l'ouvrant coulissant motorisé 2.

Bien entendu, on comprend que lors du passage de l'ouvrant coulissant motorisé 2 de sa position d'ouverture à sa position de fermeture, le câble d'alimentation 4 vient se loger dans le logement 11.

Ainsi la présente invention atteint bien le but qu'elle s'était fixé en proposant une architecture d'un ouvrant motorisé permettant de protéger un câble d'alimentation tout en minimisant l'encombrement de l'ouvrant coulissant motorisé au moyen d'un bac de protection au sein duquel un logement permet de loger un câble d'alimentation en épousant les formes du câble d'alimentation pour minimiser l'espace dudit logement.

## Revendications

1. Ouvrant coulissant motorisé (2) destiné à équiper un véhicule (36), l'ouvrant coulissant motorisé (2) comprenant un panneau extérieur (6), un panneau intérieur (8), au moins une partie d'un moyen d'entraînement configuré pour permettre l'ouverture et/ou la fermeture de l'ouvrant coulissant motorisé (2), ledit moyen d'entraînement comportant notamment une motorisation rendant l'ouvrant coulissant motorisé (2) et au moins un câble d'alimentation (4) disposé dans le volume de l'ouvrant coulissant motorisé (2), l'au moins un câble d'alimentation (4) étant configuré pour permettre l'alimentation en énergie électrique d'au moins un moteur d'entraînement compris dans l'ouvrant coulissant motorisé (2) et/ou d'une commande électrique du moyen d'entraînement comportant au moins un moteur d'entraînement disposé sur la caisse du véhicule sur laquelle l'ouvrant coulissant motorisé (2) est destiné à être monté à coulissement, **caractérisé en ce que** le panneau intérieur (8) comprend une découpe dans laquelle est logé un bac de protection (10), le bac de protection (10) forme un logement (11) de réception dans lequel est disposé l'au moins un câble d'alimentation (4), le bac de protection (10) étant distinct du panneau intérieur (8) et solidarisé audit panneau intérieur (8).

2. Ouvrant coulissant motorisé (2) selon la revendication précédente, dans lequel le logement (11) est disposé dans le volume de l'ouvrant coulissant motorisé (2) défini entre le panneau extérieur (6) et le panneau intérieur (8).

3. Ouvrant coulissant motorisé (2) selon la revendication précédente, dans lequel le logement (11) est délimité au moins en partie par une paroi de fond (22) et par une paroi latérale (24), la paroi latérale (24) et la paroi de fond (22) formant un premier angle (26) l'une avec l'autre compris entre 90° et 120°.

4. Ouvrant coulissant motorisé (2) selon l'une quelconque des revendications 2 ou 3, dans lequel le logement (11) du bac de protection (10) est délimité par un bord périphérique (18) du bac de protection (10), le bord périphérique (18) étant solidarisé au panneau intérieur (8).

5. Ouvrant coulissant motorisé (2) selon l'une quelconque des revendications précédentes, dans lequel le logement (11) présente une forme qui épouse la forme du câble d'alimentation (4).

6. Ouvrant coulissant motorisé (2) selon l'une quelconque des revendications précédentes, dans lequel le câble d'alimentation (4) est entièrement logé dans le logement (11) formé par le bac de protection (10).

7. Ouvrant coulissant motorisé (2) selon la revendication 4, dans lequel le bord périphérique (18) est au contact du panneau intérieur (8) par un appui plan.

8. Ouvrant coulissant motorisé (2) selon la revendication 7, dans lequel le logement (11) est délimité par le bord périphérique (18).

9. Ouvrant coulissant motorisé (2) selon l'une quelconque des revendications 4 et 8, dans lequel le bac de protection (10) est solidarisé au panneau extérieur (6) au niveau d'une portion du bac de protection (10) distincte du bord périphérique (18).

10. Ouvrant coulissant motorisé (2) selon la revendication précédente, dans lequel la portion du bac de protection (10) au niveau de laquelle est solidarisé le bac de protection (10) au panneau extérieur (6) est disposée en regard du logement (11).

11. Véhicule automobile (36) comprenant un ouvrant coulissant motorisé (2) selon l'une quelconque des revendications précédentes, le véhicule automobile (36) comprenant un rail de guidage dans lequel l'ouvrant coulissant motorisé (2) est apte à se déplacer entre une position d'ouverture et une position de fermeture, le bac de protection (10) de l'ouvrant coulissant motorisé (2) étant disposé directement en regard du rail de guidage.

## Patentansprüche

1. Motorisierte Schiebetür (2), die zur Ausstattung eines Fahrzeugs (36) bestimmt ist, wobei die motorisierte Schiebetür (2) ein Außenblech (6), ein Innenblech (8), mindestens einen Teil einer Antriebseinrichtung, die dazu ausgestaltet ist, das Öffnen und/oder Schließen der motorisierten Schiebetür (2) zu ermöglichen, umfasst, wobei die Antriebseinrichtung insbesondere eine Motorisierung, die die Schiebetür (2) motorisiert macht, und mindestens ein Versorgungskabel (4), das in dem Volumen der motorisierten Schiebetür (2) angeordnet ist, umfasst, wobei das mindestens eine Versorgungskabel (4) dazu ausgestaltet ist, die Versorgung mit elektrischer Energie mindestens eines in der motorisierten Schiebetür (2) enthaltenen Antriebsmotors zu ermöglichen und/oder einer elektrischen Steuerung der Antriebseinrichtung, die mindestens einen Antriebsmotor umfasst, der an der Karosserie des Fahrzeugs angeordnet ist, an welcher die motorisierte Schiebtür (2) verschiebbar angebracht werden soll, **dadurch gekennzeichnet, dass** das Innenblech (8) einen Ausschnitt umfasst, in dem eine Schutzschale (10) untergebracht ist, wobei die Schutzschale (10) ein Aufnahmegehäuse (11) bildet, in dem das mindestens eine Versorgungskabel (4) angeordnet ist, wobei die Schutzschale (10) von dem Innenblech (8) verschieden ist und an dem Innenblech (8) befestigt ist.

2. Motorisierte Schiebetür (2) nach dem vorhergehenden Anspruch, wobei das Gehäuse (11) in dem Volumen der motorisierten Schiebetür (2) angeordnet ist, das zwischen dem Außenblech (6) und dem Innenblech (8) definiert wird.

3. Motorisierte Schiebetür (2) nach dem vorhergehenden Anspruch, wobei das Gehäuse (11) mindestens teilweise durch eine Bodenwand (22) und durch eine Seitenwand (24) begrenzt wird, wobei die Seitenwand (24) und die Bodenwand (22) miteinander einen ersten Winkel (26) zwischen 90° und 120° bilden.

4. Motorisierte Schiebetür (2) nach einem der Ansprüche 2 oder 3, wobei das Gehäuse (11) der Schutzschale (10) durch einen Umfangsrand (18) der Schutzschale (10) begrenzt wird, wobei der Umfangsrand (18) an dem Innenblech (8) befestigt ist.

5. Motorisierte Schiebetür (2) nach einem der vorhergehenden Ansprüche, wobei das Gehäuse (11) eine Form aufweist, die der Form des Versorgungskabels (4) entspricht.

6. Motorisierte Schiebetür (2) nach einem der vorhergehenden Ansprüche, wobei das Versorgungskabel (4) vollständig in dem durch die Schutzschale (10) gebildeten Gehäuse (11) untergebracht ist.

7. Motorisierte Schiebetür (2) nach Anspruch 4, wobei der Umfangsrand (18) durch eine plane Anlage in Kontakt mit dem Innenblech (8) ist.

8. Motorisierte Schiebetür (2) nach Anspruch 7, wobei das Gehäuse (11) durch den Umfangsrand (18) begrenzt wird.

9. Motorisierte Schiebetür (2) nach einem der Ansprüche 4 und 8, wobei die Schutzschale (10) an dem Außenblech (6) an einem von dem Umfangsrand (18) verschiedenen Abschnitt der Schutzschale (10) befestigt ist.

10. Motorisierte Schiebetür (2) nach dem vorhergehenden Anspruch, wobei der Abschnitt der Schutzschale (10), an dem die Schutzschale (10) an dem Außenblech (6) befestigt ist, gegenüber dem Gehäuse (11) angeordnet ist.

11. Kraftfahrzeug (36), das eine motorisierte Schiebetür (2) nach einem der vorhergehenden Ansprüche umfasst, wobei das Kraftfahrzeug (36) eine Führungsschiene umfasst, in der sich die motorisierte Schiebetür (2) zwischen einer Öffnungsstellung und einer Schließstellung bewegen kann, wobei die Schutzschale (10) der motorisierten Schiebetür (2) direkt gegenüber der Führungsschiene angeordnet ist.

## Claims

1. Motorized sliding opening leaf (2) intended to be fitted to a vehicle (36), the motorized sliding opening leaf (2) comprising an outer panel (6), an inner panel (8), at least a part of a drive means configured to make possible the opening and/or closing of the motorized sliding opening leaf (2), said drive means having in particular a drive system making the sliding opening leaf (2) motorized and at least one power supply cable (4) disposed in the volume of the motorized sliding opening leaf (2), the at least one power supply cable (4) being configured to make it possible to supply electrical energy to at least one drive motor contained in the motorized sliding opening leaf (2) and/or to an electrical control of the drive means having at least one drive motor disposed on the bodyshell of the vehicle, on which the motorized sliding opening leaf (2) is intended to be mounted so as to be able to slide, **characterized in that** the inner panel (8) comprises a cutout in which a protective tray (10) is housed, the protective tray (10) forms a receiving housing (11) in which the at least one power supply cable (4) is disposed, the protective tray (10) being distinct from the inner panel (8) and secured to said inner panel (8).

2. Motorized sliding opening leaf (2) according to the preceding claim, wherein the housing (11) is disposed in the volume of the motorized sliding opening leaf (2) defined between the outer panel (6) and the inner panel (8).

3. Motorized sliding opening leaf (2) according to the preceding claim, wherein the housing (11) is delimited at least in part by a bottom wall (22) and by a lateral wall (24), the lateral wall (24) and the bottom wall (22) forming a first angle (26) with one another of between 90° and 120°.

4. Motorized sliding opening leaf (2) according to either one of Claims 2 and 3, wherein the housing (11) of the protective tray (10) is delimited by a peripheral edge (18) of the protective tray (10), the peripheral edge (18) being secured to the inner panel (8).

5. Motorized sliding opening leaf (2) according to any one of the preceding claims, wherein the housing (11) has a shape that matches the shape of the power supply cable (4).

6. Motorized sliding opening leaf (2) according to any one of the preceding claims, wherein the power supply cable (4) is entirely housed in the housing (11) formed by the protective tray (10).

7. Motorized sliding opening leaf (2) according to Claim 4, wherein the peripheral edge (18) is in contact with the inner panel (8) via a flat bearing surface.

8. Motorized sliding opening leaf (2) according to Claim 7, wherein the housing (11) is delimited by the peripheral edge (18).

9. Motorized sliding opening leaf (2) according to either one of Claims 4 and 8, wherein the protective tray (10) is secured to the outer panel (6) at a portion of the protective tray (10) that is distinct from the peripheral edge (18).

10. Motorized sliding opening leaf (2) according to the preceding claim, wherein the portion of the protective tray (10) at which the protective tray (10) is secured to the outer panel (6) is disposed facing the housing (11).

11. Motor vehicle (36) comprising a motorized sliding opening leaf (2) according to any one of the preceding claims, the motor vehicle (36) comprising a guide rail in which the motorized sliding opening leaf (2) is able to move between an opening position and a closing position, the protective tray (10) of the motorized sliding opening leaf (2) being disposed directly facing the guide rail.
